Europäisches Patentamt

European Patent Office

Office européen des brevets

(11) Publication number: **0 024 209**
A1

# (12) EUROPEAN PATENT APPLICATION

(21) Application number: **80302826.5**

(22) Date of filing: **15.08.80**

(51) Int. Cl.³: **F 16 K 27/02**

(30) Priority: **21.08.79 GB 7929090**

(43) Date of publication of application:
**25.02.81 Bulletin 81/8**

(84) Designated Contracting States:
**BE DE FR GB IT LU NL**

(71) Applicant: **Felton, George Aubrey**
**14, Hall Park**
**Berkhamsted, Hertfordshire(GB)**

(72) Inventor: **Felton, George Aubrey**
**14, Hall Park**
**Berkhamsted, Hertfordshire(GB)**

(74) Representative: **Westwood, Edgar Bruce et al,**
**STEVENS,HEWLETT & PERKINS 5, Quality Court**
**Chancery Lane**
**London WC2A 1HZ(GB)**

(54) **Fluid flow control valves.**

(57) A fluid flow control valve comprises a housing (1) of rigid composite plastics material and a closure member (2) at least the external portion (41) of which is also a rigid composite plastics material, to provide resistance to chemical attack. A metal outer casing (30) surrounds the housing (1) to provide protection to the valve against fire hazard and mechanical damage.

Fig. 2

EP 0 024 209 A1

Croydon Printing Company Ltd.

- 1 -

## FLUID FLOW CONTROL VALVES.

This invention relates to fluid flow control valves.

It is known from, for example, GB-PS 1,259,846 and GB-PS 1,414,093 to make a valve, in particular a butterfly valve substantially or entirely of composite plastics material. The use of rigid composite plastics materials provides considerable economic and installation advantages over conventional valves manufactured throughout of metal, and the rigid composite plastics material used can readily be selected to resist chemical attack by corrosive fluids thus giving the valves particular utility in environments where corrosive fluids are to be handled.

However, some such environments, particularly petro-chemical plants, oil refineries or oil tankers create additional problems in that there is a fire hazard and there is also a risk of mechanical damage occurring to an all plastics valve if, for example, a large or heavy object is dropped onto the valve.

In oil tankers and especially very large crude carriers it is a presently preferred safety practice against explosive hazards to fill the empty space in the tanks with an inert gas. For this purpose use is commonly made of the $CO_2$ content of engine exhaust gases which, although scrubbed and cleaned, are still of a corrosive nature. The use of rigid composite plastics valves in pipe-lines for controlling the flow of such gases is therefore attractive in terms of the high resistance of the composite plastics material to chemical attack, but hitherto such valves have not been used because of possible damage to the valves under fire conditions and the risk of accidental mechanical damage occurring through high impact loads.

All conventional valves classified as fire safe for use in the petroleum, petrochemical and allied industries are of all-steel construction and the use of plastic in their construction has been limited to the provision of PTFE seats and stem seals. It is assumed that on exposure to a fire the PTFE components will disintegrate or decompose. This is recognised by the fire safe test specified, for example in British Standard Specification No. 5146: 1974 and other comparable Standards in which the valve is exposed to fire for a period sufficient to ensure that the PTFE soft seats, and stem seals if fitted, have disintegrated or decomposed. Thereafter the valve has to satisfy a minimum leakage rate on low and high pressure test.

Thus conventional design philosophy has been to expect valves to be damaged by exposure to fire, and it has been accepted that the valves will thereafter leak. Design improvements proposed have been restricted to attempts to contain the rate of leakage. Thus, when the PTFE seals have burnt out arrangements have been made for the closure member to move over under the internal fluid pressure into contact with an underlying metal seat which, although not forming a fluid-tight seal, will at least prevent a substantial flow of fluid through the valve.

The invention is intended to solve the problem of providing a valve which retains the advantages of the stable structural form and the resistance to chemical attack of rigid composite plastics materials while incorporating protection against catastrophic damage from fire by utilizing the very low thermal conductivity of the material (0.3% that of steel) with suitable external surface protective means to prevent ablation of the external surface by flame impingement.

The present invention represents a new approach by utilizing the insulating properties of rigid composite plastics materials to form a barrier against internal damage to the valve for a period significantly longer than that in which the plastics components of the conventional all-metal valve will burn out and attain thereby a greatly increased measure of fire safety without leakage.

A fluid flow control valve according to the invention comprises a housing (1) of rigid composite plastics material of low thermal conductivity having two separately positioned openings therein for connection in a pipe-line, and a closure member (2) at least the external portion of which is of a rigid composite plastics material, said closure member (2) being positioned in said housing intermediate said openings so as to be movable to a position wherein it provides a closure preventing fluid flow between said openings, and is characterised by a metal outer casing (30) in which the plastics housing (1) is located and to which the housing (1) is bonded.

The housing is preferably cylindrical externally.    In accordance with one form of the invention, a preformed housing is secured within the surrounding metal outer casing by an adhesive bond using, for example an epoxy resin adhesive.

The invention, however, affords a specific advantage in a preferred form which facilitates production of the valves by enabling the metal protective casing to be placed as a core directly into a moulding die to be integrated with the composite during a moulding operation in which the housing is bonded to the casing by being moulded in situ therein.    In either form the bond between the composite plastic housing and the metal outer casing is preferably reinforced by integral locking members.    Such locking members may take the form, for example, of locking keys projecting from the outer casing and into the material of the housing.    Alternatively, a lock may be obtained by forming grooves in the mating faces of the outer casing, and filling the grooves during moulding of the housing and the outer casing.

Fluid flow control valves of all types may be constructed in accordance with the invention including, for example,ball valves, non-return valves diaphragm and butterfly valves.    The closure member may comprise a steel or cast iron core enclosed within a rigidly moulded composite epoxy resin casing.    In a butterfly valve, the closure member is a blade rotatably positioned in the housing intermediate the openings.    The blade is mounted on a spindle disposed along the axis of rotation of the blade.  Preferably the blade is secured to the spindle for rotation thereby by means of a key or other standard attachment means, such as pins.

The metal outer casing may be forged, cast or fabricated, and is preferably steel.

A preferred embodiment of valve according to the invention, in the form of a butterfly valve, is illustrated by way of example in the accompanying drawings in which :-

Figure 1 is an end elevation of the valve, and

Figure 2 is a section along the line II - II of Figure 1.

It is to be understood that whilst the ensuing description relates principally to a butterfly valve of the asymmetric kind the invention is equally applicable to valves of the symmetric kind, wherein the axis of pivot of the blade lies in the same plane as the sealing edge of the blade, as well as to valves of other types for example, ball, check and diaphragm valves.

The valve comprises a housing denoted generally 1 and a blade denoted generally 2 positioned between openings at either end of the housing.  These openings are circular and comprise the inlet and outlet from the valve when it is connected in a pipe-line.  The blade 2 is rotatable to a position wherein it provides a closure between the openings.

The valve shown in the drawings is a wafer valve with bolt guide flanges and is  held in position by bolts extending between flanges on the two pipe-line ends (not shown) between which it is connected. Alternatively the valve may be of the full "flange" variety and then has an annular flange located about each opening with appropriately positioned bolt holes therein for attachment to corresponding flanges formed on the ends of the pipe-line.

In the embodiment depicted the valve housing 1 is formed in one piece by moulding in a suitable rigid composite plastics material of low thermal conductivity. Suitable plastics resins for forming the housing include, for example, epoxy resins, polyethylene, vinyl ester resins and polyphenylene sulphide resins. The housing 1 is generally cylindrical in external configuration and is located within a metal outer casing denoted generally 30 and comprising a tubular casing portion 31 surrounding the housing 1 and a neck portion 32. The casing 1 may be bonded to the casing 30 by a suitable adhesive such as an epoxy resin, or may be moulded _in situ_ within the casing 30. Thus, the casing 30 may be placed in a standard, unmodified moulding die that would be used to mould an all-composite form of the valve, and the valve housing 1 is then moulded directly within the die containing the casing 30 so that the housing 1 and casing 30 are bonded integrally by the moulding operation.

The housing 1 is secured in the casing 30 by the bond at the interface between the housing 1 and the tubular casing portion 31, and is also locked by means of a plurality of locking members 35 which project radially into the casing 30 and the housing 1 at intervals around the perimeter thereof.

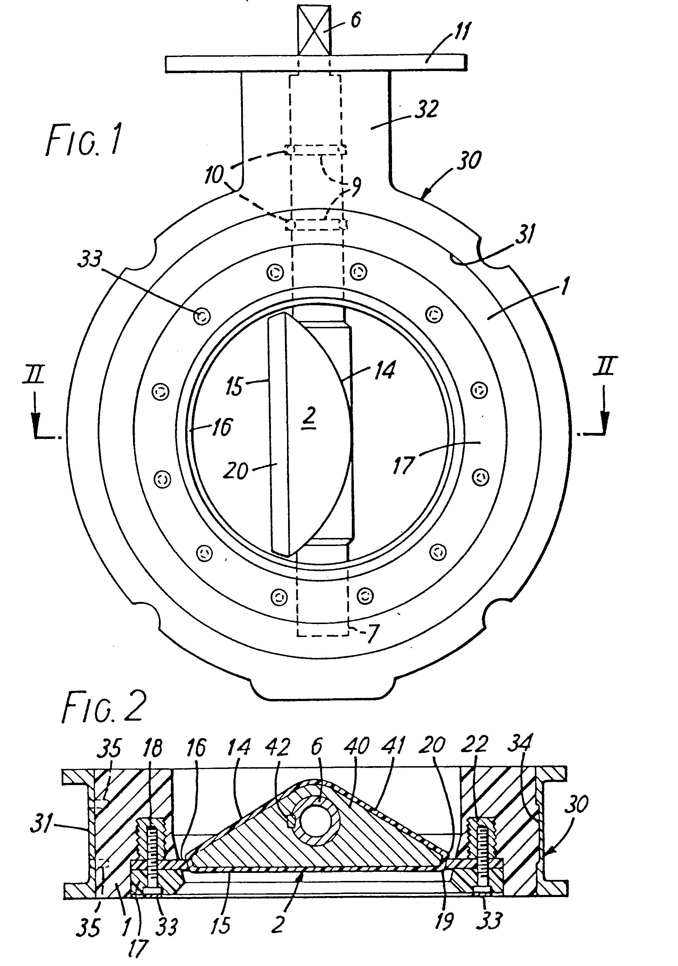

An alternative form of lock is indicated at the right-hand side of Figure 2, according to which axially extending grooves 34 are formed in the radially inner face of the casing tubular portion 31, and are filled during moulding of the housing.

The circular valve blade 2 pivots intermediate the two circular openings in housing 1 about an axis crossing the longitudinal axis of the valve housing substantially at right angles. The blade is mounted on a spindle 6 which is journalled in the valve. The spindle may be of metal or of resin impregnated wound fibre construction as described in GB-PS 1,414,093. As shown in Figure 1 the spindle 6 is located at its lower extremity in a well or socket 7 in the side of the housing. At its upper extremity the spindle 6 rotates in the neck 32. An annular recess 9 is formed in neck 32 and another annular recess 9 is formed in housing 1 and in each recess 9 is located a ring seal 10 bearing on spindle 6. The ring seals may suitably be of synthetic rubber or polytetrafluoroethylene.

The upper portion of spindle 6 is of reduced diameter. After spindle 6 has been positioned in housing 2 a thrust collar 11 is mounted on the neck 32 so as to bear on the shoulder between the reduced diameter portion of spindle 6 and the remainder thereof. Thrust collar 11 ensures that the correct longitudinal positioning of spindle 6 is maintained. Spindle 6 protrudes a short distance from neck 32 to allow positioning of turning means.

The blade 2 is generally disc-shaped with a diameter only slightly less than the adjacent inside diameter of the housing 1 so that it may be rotated to substantially cover the cross-section of the housing. It will be noted from Figure 2 that the blade 2 is asymmetric in that one face 14 of the blade is closer to the spindle 6 than the other face 15. Face 15 is substantially planar. Face 14 on the other hand is generally convex or conical but has a segmental cylindrical embossment or protuberance therealong around spindle 6.

The blade 2 is of composite construction and at least the external portion thereof is constructed of a rigid composite plastics material, typically the same material as the housing 1. The blade 2 in the embodiment depicted comprises a metal, namely steel or cast iron, core 40 onto which is moulded a rigid composite plastics external portion or skin 41. The blade core 40 is keyed to the spindle 6 by a key 42 so that the blade 2 is positively rotated by turning the spindle 6.

In the preferred embodiment the seal between the housing 1 and the blade 2 is attained by means of a flat annular sealing ring 16 of a chemically resistant synthetic rubber or other suitable flexible material. Sealing ring 16 is seated on a recessed annular ledge on housing 2 and maintained in this position by a retaining ring 17 of composite plastics material. Retaining ring 17 is mounted to housing 2 by means of a plurality of screws 18 screwed into threaded inserts 22 moulded into the housing 1. After tightening, the heads of the screws 18 are sealed by covering them with epoxy resin 33 to protect them against corrosion.

The inwardly disposed edge 19 of sealing ring 16 abuts in the closed position against the outwardly disposed peripheral edge 20 of blade 2. It will be noted from the drawings that edge 20 is somewhat slanted, the diameter of the blade increasing from face 15 to face 14. The edge 19 of sealing ring 16 is at a slant consistent with that of edge 20. Preferably, however, both edges are also somewhat rounded so as to prevent scuffing on opening and closing of the valve.

As previously noted the housing is generally cylindrical in outward appearance. The inside surface of the housing is also generally cylindrical, however, in the vicinity of seal 16 the housing is of slightly reduced inside diameter, the surface slanting somewhat, following the slanting edge 19 of sealing ring 16 and edge 20 of blade 2.

Accordingly if, in the closed position, the fluid pressure is on surface 15 of the blade, the pressure as applied in the channel between the inside surface of the housing and the edge 20 of the blade will tend to force the seal 16 against the blade 2, thus ensuring better closure.

In a further alternative to the preferred embodiment the seal may be provided not on the housing but on the periphery of the blade to provide additional protection against heat penetration through the valve body.

As a further alternative still the sealing may be attained through incorporation of a moulded-in resilient liner of rubber or other suitable material. With such an embodiment it will be appreciated that the blade would be preferably of the symmetrical kind.

A valve constructed in accordance with the invention as a composite of metal and rigid composite plastics materials withstands fire situations where the metal casing affords direct protection against flame impingement as well as protection against mechanical impact damage to the relatively weaker composite material. The rigid composite plastics material provides a very high level of insulation to heat penetration through the valve and affords maximum protection to internal components and to any fluid being conveyed as well as exhibiting outstanding resistance to chemical attack from the fluid itself.

In addition it has been found that the metal casing acts as a reinforcement of the rigid composite material enabling a valve constructed according to the invention to control fluids at higher pressures than an all-plastics valve. This provides improved safety in the event of a fire which can cause fluid in the valve to expand.

CLAIMS.

1.      A fluid flow control valve which comprises a housing (1) of rigid composite plastics material of low thermal conductivity having two separately positioned openings therein for connection in a pipe-line, and a closure member (2) at least the external portion of which is of a rigid composite plastics material, said closure member (2) being positioned in  said housing intermediate said openings so as to be movable to a position wherein it provides a closure preventing fluid flow between said openings, characterised by a metal outer casing (30) in which the plastics housing (1) is located and to which the housing (1) is bonded.

2.      A valve according to Claim 1, wherein the housing (1) is moulded in situ in the casing (30).

3.      A valve according to Claim 1, wherein the housing (1) is adhesively bonded to the casing (30).

4.      A valve according to Claim 1, including locking members (34, 35) connecting the housing (1) and the casing (30).

5.      A valve according to Claim 4, wherein the locking members comprise keys (35) projecting from the outer casing (30) into the material of the housing (1).

6.      A valve according to Claim 4,  wherein the locking members comprise grooves (34) in the mating face of the outer casing (1), said grooves (34) being filled with housing material during the moulding thereof.

7.     A valve according to Claim 1, wherein the metal outer casing (30) is forged, cast or fabricated in steel.

8.     A valve according to Claim 1, wherein the closure member (2) comprises a metal core (40) onto which is moulded a rigid composite plastics external portion (41).

9.     A valve according to Claim 1, wherein the closure member (2) co-operates with a sealing ring (16) of chemically resistant material.

0024209

FIG.1

FIG.2

0024209

European Patent
Office

EUROPEAN SEARCH REPORT

Application number

EP 80 30 2826.5

## DOCUMENTS CONSIDERED TO BE RELEVANT

| Category | Citation of document with indication, where appropriate, of relevant passages | Relevant to claim |
|---|---|---|
| | DE - A - 2 145 196 (XOMOX) <br> * page 5, line 8 to page 6, line 6; fig. 1 * <br> & US - A - 3 703 910 | 1,2, 4-8 |
| | DE - A - 2 363 993 (ACF) <br> * fig. 1, 9 * <br> & GB - A - 1 453 752 | 1,2, 4-6. 9 |
| | CH - A5 - 594 838 (LORENTIS) <br> * column 2, lines 62 to 65; fig. 1 to 4 * | 1,2, 4-6 |
| | DE - A1 - 2 521 498 (LORENTIS) <br> * column 7, lines 1 to 4; column 2, lines 25 to 27; fig. 3, 4 * | 1,2,4, 6,7 |
| | DE - B - 1 288 392 (ACF) <br> * column 3, lines 6 to 34; fig. 1 * | 1,2,4, 6,9 |
| | DE - U - 7 704 975 (ATOMAC) <br> * page 3, lines 7 to 18; fig. 1 * | 1,4-9 |
| A | US - A - 4 010 775 (R.A. ROBERTS) | |
| A | DE - B - 1 209 827 (J. GACHOT) | |
| A | US - A - 3 227 174 (J.M. YOST) | |

### CLASSIFICATION OF THE APPLICATION (Int. Cl.3)

F 16 K 27/02

### TECHNICAL FIELDS SEARCHED (Int.Cl.3)

F 16 K 1/00

F 16 K 25/00

F 16 K 27/00

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims |
|---|---|

| Place of search | Date of completion of the search | Examiner |
|---|---|---|
| Berlin | 06-11-1980 | SCHLABBACH |

EPO Form 1503.1  06.78